Europäisches Patentamt

European Patent Office

Office européen des brevets

(11) Publication number: **0 102 785**
**A2**

(12) # EUROPEAN PATENT APPLICATION

(21) Application number: **83304691.5**

(22) Date of filing: **12.08.83**

(51) Int. Cl.³: **B 60 N 1/06**

(30) Priority: **31.08.82 GB 8224824**

(43) Date of publication of application:
**14.03.84 Bulletin 84/11**

(84) Designated Contracting States:
**DE FR GB**

(71) Applicant: **Britax (Dynasafe) Limited**
**Union Road**
**Bolton BL2 2US(GB)**

(72) Inventor: **Cunningham, Douglas James**
**Sambourne 4 Church Close Dunton Bassett**
**Lutterworth Leicestershire LE16 5JY(GB)**

(74) Representative: **Hollinghurst, Antony**
**Britax Central Services 40 Granby Avenue**
**Garretts Green Birmingham, B33 0SJ(GB)**

(54) Vehicle seat.

(57) An adjustable height vehicle seat (10) comprises a seat frame (14, 16), an underframe (28, 30) and an adjustment device for varying the distance between the seat frame and the underframe. The adjustment device comprises a pair of bell-crank levers each having one short arm (42, 46) and one long arm (40, 44), and each being pivotally mounted, at the junction between its arms, on the underframe (34) for angular movement about a respective one of a pair of spaced parallel axes (36, 38). The free ends of the long arms of the levers (40, 44) are pivotally connected to opposite side members (14, 16) of the seat frame for regular movement relative thereto about respective axes (72, 74) parallel to said spaced parallel axes (36, 38). The short arm (42, 46) of each of the levers carries a respective pivotally mounted nut (64, 68) which engages with a corresponding screw-threaded portion (54, 56) of an interconnecting rod (52), the screw-threads of the two portions (54, 56) being of opposite sense. Adjustments of the height of the seat (10) is effected by rotating the interconnecting rod (52), either manually or by means of an electric motor.

./...

Croydon Printing Company Ltd.

FIG 3

- 1 -

"Vehicle Seat"

This invention relates to a vehicle seat and more particular to an adjustable height vehicle seat.

According to the invention, an adjustable height vehicle seat comprises a seat frame, an underframe and an adjustment device for varying the distance between the seat frame and the underframe, the adjustment device comprising a pair of bell-crank levers each having one short arm and one long arm and each being pivotally mounted, at the junction between its arms, on one of the frames for angular movement about a respective one of a pair of spaced parallel axes, the free ends of the long arms of the levers being pivotally connected to opposite side members of the other frame for angular movement relative thereto about respective axes parallel to said spaced parallel axes, and the short arm of each of the levers carrying a respective pivotally mounted nut which engages with a corresponding screw-threaded portion of an interconnecting rod, the screw-threads of the two portions being of opposite sense.

Adjustment of the height of the seat is effected by rotating the interconnecting rod, either manually or by means of an electric motor. In order to ensure that the two bell-crank levers raise their respective sides of the seat to the same extent, the interconnecting rod is preferably mounted in means secured to the first mentioned frame, said means permitting rotation of the rod while inhibiting axial displacement thereof.

In one form of the invention separate adjustment of the front and rear ends of the seat is effected by providing separate pairs of bell-crank levers, with respective threaded interconnecting rods, at the front and rear of the seat.

An embodiment of the invention will now be described, by way of example, with reference to the accompanying drawings, in which:

Figure 1 is a plan view of a seat in accordance with the invention.

Figure 2 is a schematic cross-sectional view taken on the line 2 - 2 in Figure 1, with the seat in its lowest position, and

Figure 3 is a cross-sectional view, also taken on the line 2 - 2 in Figure 1, but showing the seat in its highest position.

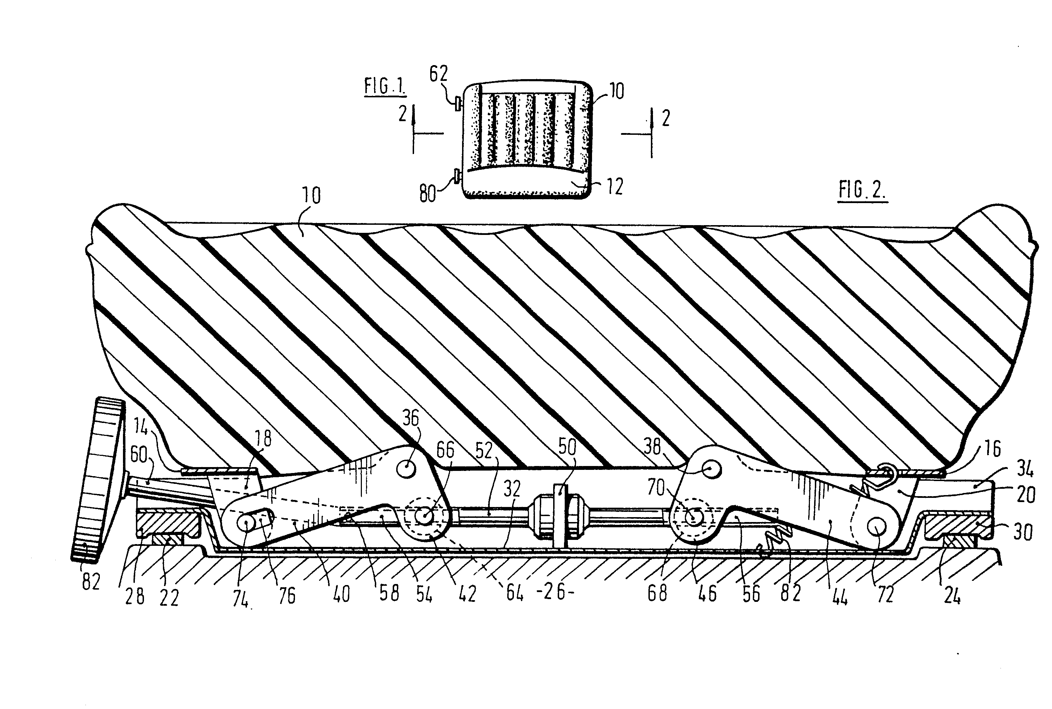

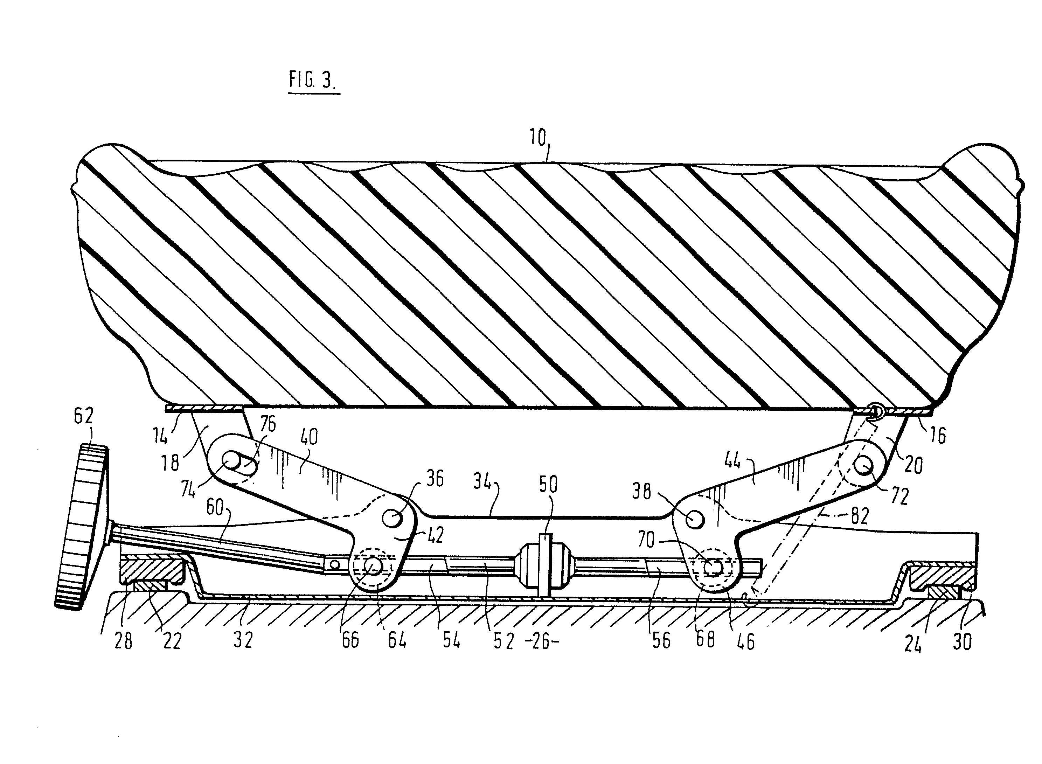

Referring first to Figure 1, a vehicle seat has a seat cushion 10 and a seat back 12. As can best be seen from Figures 2 and 3, the seat cushion 10 is supported on a seat frame which includes two longitudinally extending side members 14 and 16, each of which has a respective downwardly extending bracket 18, 20 secured adjacent to its front end. These brackets, together with corresponding brackets (not shown) adjacent to the rear ends of the frame members 14 and 16, serve to support the seat on the height adjustment device, as will be explained hereinafter.

The seat is mounted on a pair of seat slides, the static components 22 and 24 of which are secured to the vehicle floor 26. The moveable components 28 and 30 of the seat slides, together with a front transverse member 32 and a corresponding rear transverse member (not shown) form a sub-frame for the seat. The front transverse member 32 includes an upwardly projecting flange 34 which carries a pair of pivot axles 36 and 38 which are symmetrically disposed with respect to the longitudinal centre-line of the seat. Pivotally mounted on the axle 36 is a bell-crank lever having a long arm 40 and a short arm 42. A similar bell-crank lever, having a long arm 44 and a short arm 46, is pivotally mounted on the axle 38.

Centrally mounted on the transverse sub-frame member 34 is a bearing 50 in which is journalled a transversely extending rod 52 in such a manner that the rod 52 is free to rotate but is restrained against axial movement. Respective end zones 54 and 56 of the rod 52 have screw-threads of opposite sense cut therein. The left-hand end, comprising the screw-threaded zone 54, is coupled, by a universal joint 58, to a second rod 60 which carries a knob 62 whereby the rod 52 maybe rotated manually.

The left-hand screw-threaded zone 54 carries a nut 64 which is pivotally mounted on the short bell-crank arm 42 by means of a pivot pin 66. Similarly, the right-hand screw-threaded zone 56 carries a nut 68 which is pivotally mounted on the bell-crank arm 46 by means of a pivot pin 70.

The free end of the long arm 44 of the right-hand bell-crank lever is pivotally connected to the bracket 20 by means of a pivot pin 72. Similarly, the free end of the long arm 40 of the left-hand bell-crank lever is connected to the bracket 18 by a pivot pin 74, but the connection to the arm 40 is by means of a slot 76 which absorbs the radial movement resulting from the arcuate travel of the bell-crank levers.

The transverse sub-frame member (not shown) at the rear of the seat is connected to the rear transverse member (not shown) of the seat frame by a similar arrangement of bell-cranks. The manual adjustment knob 80 for this second arrangement of bell-cranks, corresponding to the knob 62, can be seen in Figure 1.

In use, when the height of the front of the seat is to be adjusted, the knob 62 is rotated so as to vary the spacing of the nuts 64 and 68 on the rod 52. The resulting angular movement of the bell-crank levers causes the distance between the longitudinal members 14 and 16 of the seat frame on the one hand and the transverse member 26 of the sub-frame on the other to be varied. A spring 82 interconnects the transverse member 26 of the sub-frame and the right-hand longitudinal member 16 of the seat frame so as to absorb any free-play in the mechanism and prevent rattling.

Similarly, when the height of the rear of the seat is to be adjusted, the knob 80 is rotated manually.

It will be apparent to those skilled in the art that the knobs 62 and 80 may be replaced by respective electric motors if an electrically adjustable seat is required.

## CLAIMS

1.      An adjustable height vehicle seat (10) comprising a seat frame (14, 16), an underframe (28, 30) and an adjustment device for varying the distance between the seat frame and the underframe, characterised in that the adjustment device comprises a pair of bell-crank levers each having one short arm (42, 46) and one long arm (40, 44) and each being pivotally mounted, at the junction between its arms, on one of the frames (14, 16, 28, 30) for angular movement about a respective one of a pair of spaced parallel axes (36, 38), the free ends of the long arms (42, 46) of the levers being pivotally connected to opposite side members (28, 30, 14, 16) of the other frame for angular movement relative thereto about respective axes (72, 74) parallel to said spaced parallel axes (36, 38), and the short arm (42, 46) of each of the levers carrying a respective pivotally mounted nut (64, 68) which engages with a‾ corresponding screw-threaded portion (54, 56) of an interconnecting rod (52), the screw-threads of the two portions (54, 56) being of opposite sense.

2.      A seat according to claim 1, characterised in that the interconnecting rod (52) is mounted in means (50) secured to the first mentioned frame, said means permitting rotation of the rod (52) while inhibiting axial displacement thereof.

3.      A seat according to claim 2, characterised by separate pairs of bell-crank levers, with respective threaded interconnecting rods (62, 80), at the front and rear of the seat (10).

FIG.1.

FIG.2.

1|2

0102785

FIG. 3.